# FASCICULE DE BREVET EUROPEEN

(11) **EP 2 368 861 B1**
(45) Date de publication et mention de la délivrance du brevet: **16.12.2015**
(21) Numéro de dépôt: 11165493.5
(22) Date de dépôt: 18.10.2007
(51) Int. Cl.: C03C 23/00, B23K 26/08, B41M 5/26

(54) **Procédé et installation pour le marquage à chaud d'objets translucides ou transparents**
Verfahren und Anlage für die Heißmarkierung von lichtdurchlässigen oder durchsichtigen Gegenständen
Method and facility for hot-marking of translucent or transparent objects

(30) Priorité: 18.10.2006 FR 0654340
(43) Date de publication de la demande: 28.09.2011
(62) Demande divisionnaire de: 07858619.5
(73) Titulaire: Tiama, 69390 Vourles (FR)
(72) Inventeur: Bathelet, Guillaume, 69280 Marcy l'Etoile (FR)
(74) Mandataire: Thibault, Jean-Marc

(56) Documents cités:
- EP-A1- 0 495 647
- EP-A2- 1 657 487
- WO-A1-2004/000749
- DE-A1- 4 107 012
- FR-A1- 2 859 199
- JP-A- 9 128 578

## Description

La présente invention concerne le domaine technique du marquage d'articles ou d'objets translucides ou transparents présentant une haute température.

L'objet de l'invention vise plus précisément le marquage à chaud à haute cadence, d'objets creux tels que des bouteilles ou des flacons en verre sortant d'une machine de fabrication ou de formage.

Dans le domaine préféré de la fabrication d'objets en verre, il est connu d'utiliser des systèmes de marquage soit en sortie de la machine de formage soit dans la partie froide du processus de fabrication, afin de réaliser un horodatage en vue d'assurer la traçabilité de la fabrication.

De manière classique, une machine de formage est constituée de différentes cavités équipées chacune d'un moule dans lequel l'objet prend sa forme finale à haute température. En sortie de la machine de formage, les objets sont acheminés de manière à constituer une file sur un convoyeur de transport amenant les objets à défiler successivement devant divers postes de traitement tels que de pulvérisation et de recuit.

Il apparaît intéressant de marquer les objets le plus tôt possible à la sortie de la machine de formage de manière à ne pas créer de décalage temporel dans la détection des défauts susceptibles d'intervenir à la suite d'accumulation d'objets ou à des erreurs dans la traçabilité.

Dans l'état de la technique, diverses solutions ont été proposées pour marquer des objets à haute température sortant d'une machine de formage. Par exemple, le brevet US 4 870 922 décrit un appareil de marquage par pulvérisation contrôlée d'un fluide. La tête de marquage est disposée le long du convoyeur acheminant les objets en sortie de la machine de formage. En pratique, il s'avère que le fluide déposé en surface sous la forme d'un code ou d'un marquage est altéré voire effacé, lors des opérations de manutention, remplissage ou lavage des articles en verre, inhérentes au procédé verrier.

Pour répondre aux problèmes de la tenue du code ou du marquage dans le temps, il est connu notamment par le document JP 09 128 578, d'utiliser un système de marquage par laser qui réalise des marquages ou codes sur la surface des articles, par ablation ou fusion du verre. L'intérêt de cette technologie réside dans le fait que le code est indélébile et résiste très bien aux opérations de manutention, remplissage ou lavage inhérentes au procédé verrier.

Cette technique de marquage laser est également connue pour être mise en oeuvre dans la partie froide du processus de fabrication des objets en verre. Par exemple, le document EP 0 495 647 décrit une installation adaptée pour calculer la vitesse de défilement des objets de manière à assurer un marquage correspondant sur les objets. De même, les documents WO 2004/000749 et US 2003/052100 prévoient de détecter la position de l'objet de l'invention selon sa direction de déplacement avant d'assurer une opération de marquage de l'objet.

Toutefois, ces techniques de marquage laser présentent l'inconvénient de ne pas pouvoir assurer de manière sûre et efficace, l'ablation ou la fusion du verre. En effet, il a été constaté que le laser ne possède pas suffisamment de puissance pour réaliser la fusion du verre, compte tenu que les objets ne se trouvent pas toujours dans le plan de focalisation du laser.

Il peut être envisagé d'aligner les objets en sortie du moule de formage par des mécanismes positionnant les articles en ligne sur le convoyeur, dans la mesure où en sortie de la machine de formage, les articles glissent et ne sont jamais parfaitement alignés. L'utilisation de guides pour aligner des objets est à même de générer des défauts par contact avec les guides ou en créant des contacts entre les objets en verre en les freinant sur le convoyeur. Lorsque ces objets en verre sont à haute température, ces contacts génèrent des défauts puisque le verre à haute température est encore déformable.

Il est également connu par le document EP 1 657 487, dans le domaine du façonnage de lentilles optiques devant être identifiées, un dispositif de fabrication pour des lentilles qui, après formation, sont éjectées pour être récupérées dans un récipient de stockage. Les lentilles sont introduites via un dispositif de manipulation dans un dispositif de codage permettant de graver sur chaque lentille, un code individualisé dans lequel les données concernant le lot de fabrication, la date de fabrication et les données de contrôle de qualité peuvent être associées.

Un autre inconvénient de la technique antérieure réside dans le fait que l'opération de marquage ne permet pas d'encoder de manière sûre le numéro de moule sur chaque objet compte tenu des erreurs dans la traçabilité dues par exemple à des accumulations ou à des casses d'objets.

La présente invention vise donc à remédier à cet inconvénient en proposant une technique permettant de marquer à coup sûr, sur chaque objet, une information dépendante de la cavité de formage de chacun desdits objets.

Pour atteindre un tel objectif, l'installation est conforme à la revendication 1.

Le poste de marquage réalise sur chaque objet, un marquage donnant au moins une information sur le numéro du moule ou de la cavité d'origine de formage.

Le poste de marquage réalise sur chaque objet un marquage donnant au moins une information temporelle sur le moment de la formation des objets.

Selon un autre exemple de réalisation, le poste de marquage réalise, sur chaque objet, un marquage donnant au moins une information sur la machine de formage, la ligne de fabrication et/ou l'usine de fabrication.

Le poste de marquage réalise, sur chaque objet, un marquage donnant une identification unique pour chacun des objets.

Par exemple, les moyens de détermination de la position des objets sont des moyens optiques.

Un autre objet de l'invention est de proposer un procédé pour marquer, à la sortie d'une machine de formage, à l'aide d'un faisceau laser, des objets transparents ou translucides défilant en translation successivement devant un poste de marquage. Le procédé est conforme à la revendication 3.

Le procédé consiste à réaliser, sur chaque objet, un marquage donnant une identification unique pour chaque objet.

Avantageusement, le procédé consiste à réaliser, sur chaque objet, un marquage à partir d'au moins une des informations suivantes : machine de formage, ligne de fabrication, usine de fabrication, date de fabrication.

Par exemple, le procédé consiste à réaliser sur chaque objet un marquage codé.

Diverses autres caractéristiques ressortent de la description faite ci-dessous en référence aux dessins annexés qui montrent, à titre d'exemples non limitatifs, des formes de réalisation de l'objet de l'invention.

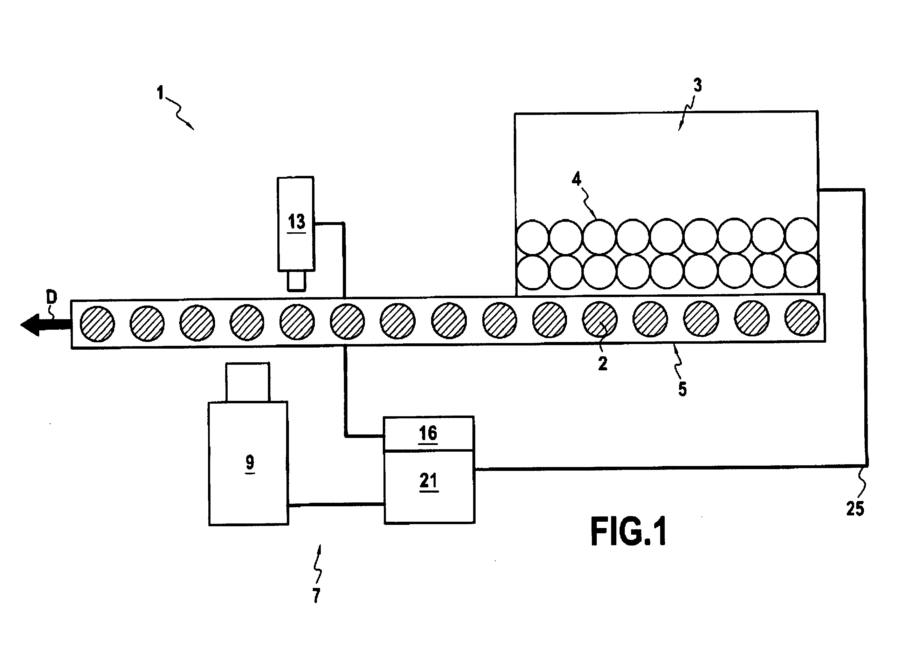

La **Figure 1** est une vue schématique illustrant un exemple de réalisation d'une installation de marquage conforme à l'invention.
Les **Figures 2** et **3** sont des vues respectivement de dessus et en perspective montrant des caractéristiques de l'installation conforme à l'invention.

L'objet de l'invention concerne une installation **1** permettant de marquer ou de graver à chaud des objets **2** par exemple creux transparents ou translucides tels que par exemple des bouteilles ou des flacons en verre.

L'installation **1** est placée de manière à assurer le marquage des objets **2** sortant d'une machine de fabrication ou de formage **3** et présentant ainsi chacun une haute température. La machine de formage **3** comporte de manière classique, une série de cavités **4** assurant chacune le formage d'un objet **2**. De manière connue, les objets 2 qui viennent d'être formés par la machine **3** constituent une file sur un convoyeur de sortie **5** de sorte que les objets **2** constituent une file sur le convoyeur **5**. Les objets **2** sont ainsi acheminés les uns à la suite des autres à différents postes de traitement selon un sens de défilement **D** de la direction **x**. Les objets se déplacent ainsi dans un plan défini par les axes **x**, **y**.

Conformément à l'invention, l'installation **1** pour marquer à chaud les objets **2** comporte un poste de marquage **7** placé au plus près en sortie de la machine de formage **3**. Le poste de marquage **7** est ainsi placé le plus près possible de la machine de formage **3** sur le trajet du convoyeur **5** qui assure ainsi le défilement successif devant le poste de marquage **7** selon le sens de défilement **D**, des objets **2** à haute température.

Le poste de marquage **7** comporte un appareil **9** de production d'un faisceau laser **11**. Un tel appareil laser **9** ne sera pas décrit plus précisément dans la mesure où il est bien connu de l'homme du métier.

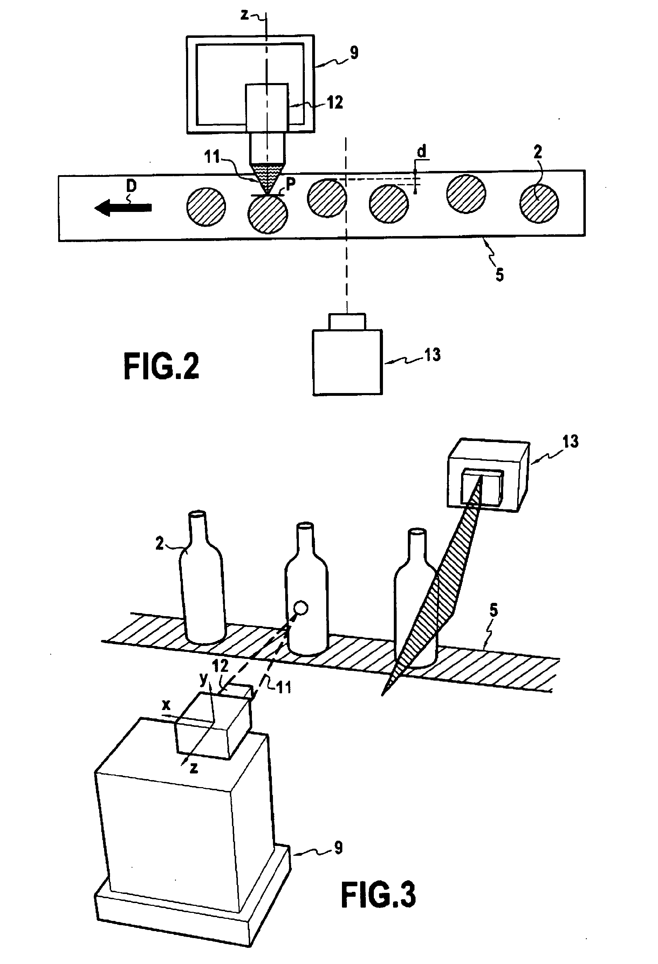

Selon une caractéristique avantageuse de l'invention illustrée plus particulièrement aux **figures 2** et **3**, cet appareil laser **9** comporte des moyens de déplacement **12** du plan de focalisation **P** du faisceau laser **11**. En d'autres termes, l'appareil laser **9** comporte des moyens pour réaliser des corrections optiques de manière à déplacer la position du plan de travail **P** du laser transversalement par rapport à la direction **D** de défilement des objets, c'est-à-dire dans l'exemple illustré, perpendiculaire au plan défini par les axes **x**, **y**. Par exemple, l'appareil laser **12** comporte en tant que moyens de déplacement **12**, un système optique motorisé piloté en déplacement.

Dans l'exemple illustré, le faisceau laser **11** présente une direction sensiblement perpendiculaire à la direction de convoyage **D** c'est-à-dire perpendiculaire au plan défini par les axes **x**, **y**. Bien entendu, il peut être envisagé que le faisceau laser **11** présente une direction transversale différente d'une direction perpendiculaire telle qu'inclinée par rapport à la direction de convoyage **D**. En tout état de cause, les moyens **12** assurent le déplacement du plan de focalisation **P** du faisceau laser **11**, selon une direction transversale **z** par rapport à la direction de convoyage **D**, c'est-à-dire selon une direction **z** qui coupe cette direction de convoyage **D**.

L'installation **1** comporte également des moyens **13** de détermination de la position de chacun des objets **2** selon au moins une direction **z** transversale à la direction de défilement **D** des objets. En d'autres termes, ces moyens **13** permettent de détecter le décalage transversal **d** des objets par rapport à la direction de défilement **D** des objets. Les moyens **13** permettent ainsi de déterminer la position selon l'axe **z** de chaque objet **2** par rapport à l'appareil laser **9**.

Selon une caractéristique de l'objet de l'invention, ces moyens de détermination **13** sont placés en amont du poste de marquage par rapport au sens de défilement. Dans l'exemple illustré aux **figures 2** et **3**, les moyens de détermination **13** sont constitués par une caméra infrarouge de type linéaire disposée sur le côté de convoyeur **5** en surélévation pour permettre de mesurer la position en profondeur des objets sur le convoyeur. Cette caméra est sensible aux rayonnements infrarouges émis par les objets **2** encore à haute température après formage. La caméra est disposée en surélévation par rapport au convoyeur de façon à former un angle non nul par rapport à l'horizontal. De plus, le champ de la caméra est perpendiculaire au sens de défilement **D** des objets. Lorsque les objets **2** sont décalés sur le convoyeur **5** selon l'axe **z**, leur position dans le champ de la caméra change. La caméra **13** génère un signal de sortie par exemple vidéo en réponse au rayonnement infrarouge émis par les objets **2**.

Une telle caméra **13** est reliée à une unité **16** de contrôle et de traitement des signaux de sortie délivrés par la caméra. Les images prisent par la caméra sont analysées par l'unité lors d'une étape de traitement pour déterminer la position des objets **2**, par exemple par triangulation. Bien entendu, l'unité de contrôle et de traitement **16** est adaptée pour piloter le fonctionnement de la caméra lors du passage d'un objet **2** dans son champ de vision de manière que la caméra prenne une image de chacun des objets **2** défilant à haute cadence.

L'installation **1** comporte également les moyens **21** permettant de piloter les moyens de déplacement **12** de l'appareil laser **9**. Ces moyens de pilotage **21** sont reliés aux moyens de détermination de la position des objets à savoir, à l'unité **16** de contrôle et de traitement des signaux sortant de la caméra. Ces moyens de pilotage **21** permettent ainsi d'adapter en fonction de la position des objets à marquer, le plan de focalisation **P** du faisceau laser de manière que ce dernier puisse, lorsque les objets passent devant l'appareil **9**, assurer un marquage convenable des objets.

Le fonctionnement de l'installation **1** conforme à l'invention découle directement de la description qui précède. Lors du passage des objets **2** devant la caméra **13**, les objets **2** sont détectés et leur position sur le convoyeur selon l'axe **z** est mesurée. Après le passage de l'objet devant la caméra et avant son passage devant l'appareil laser **9**, la mesure de la position de l'objet sur le convoyeur est transmise aux moyens de pilotage **21** qui calculent les corrections optiques à apporter éventuellement au laser et pilotent en conséquence le système optique motorisé interne à l'appareil laser **9**. Le plan focal ou de travail **P** du faisceau laser est donc adapté à la position de l'objet avant son passage devant l'appareil laser **9**. Les moyens de déplacement **12** sont tels que l'appareil laser **9** travaille dans un plan où le faisceau laser a suffisamment de puissance pour réaliser la fusion ou l'ablation de matière sur l'objet **2** lors du marquage. Les moyens de déplacement **12** déplacent le plan de focalisation **P** du faisceau laser pour ainsi optimiser le marquage réalisé sur l'objet.

Il doit donc être compris que le procédé selon l'invention comporte une étape de détermination avant leur marquage, de la position des objets, selon une direction z transversale à la direction au sens de défilement **D** des objets et une étape d'adaptation du plan de focalisation **P** du faisceau laser **11** en fonction de la position des objets à marquer de manière qu'ensuite, le faisceau laser puisse assurer une opération de marquage des objets passant devant le faisceau laser **11**. L'opération de marquage est donc assurée par le faisceau laser **11** dont la position du plan de focalisation **P** a été préalablement optimisée pour assurer le marquage des objets. Il est à noter que ce procédé est mis en oeuvre pour chaque objet défilant devant le poste de marquage **7**. Bien entendu, l'étape d'adaptation du plan de focalisation **P** peut être facultative dans le cas où deux objets consécutifs occupent la même position transversale sur le convoyeur.

L'objet de l'invention vise donc à agir directement sur l'optique de l'appareil laser **9** afin d'asservir le plan de focalisation ou de travail **P** du faisceau laser à la position des objets **2** sur le convoyeur **5** pour obtenir une intensité laser suffisante pour réaliser l'opération de marquage. Bien entendu, il peut être prévu de déplacer selon l'axe **z** l'appareil laser **9**.

Bien entendu, il est possible de mesurer la position des objets sur le convoyeur par diverses autres méthodes. Par exemple, il peut être utilisé un système par ultrasons, radar, capacitif ou inductif qui mesure la distance directe entre le capteur et la surface de l'objet. Les mesures qui évoluent au fur et à mesure du défilement des objets **2** sur le convoyeur sont transmises à l'unité de traitement. Une autre technique consiste à utiliser une caméra et une source de lumière. Dans cette technique, chaque objet génère un contraste lors de son passage devant la source lumineuse. La position de l'objet dans le champ de la caméra est analysée et permet de mesurer ainsi la position des objets sur le convoyeur selon l'axe **z**. Une autre méthode consiste à utiliser un émetteur et un récepteur laser qui par triangulation permet de mesurer la distance directe entre le capteur et la surface de l'objet.

Selon une autre caractéristique avantageuse de l'objet de l'invention, l'installation **1** comporte des moyens **25** de synchronisation entre l'unité de contrôle **21** et la machine de formage **1** de manière que pour chaque objet **2** passant devant le poste de marquage, il peut être connu la cavité d'où l'objet provient. Ainsi, la mesure de la position et la détection de la présence des objets **2** est synchronisée avec la machine de formage **1**. En d'autres termes, pour chaque cavité, il est évalué la position sur le convoyeur, de l'objet **2** issu des cavités. Dans la mesure où l'installation permet de synchroniser l'appareil laser **9** avec la machine de formage **3**, il peut être envisagé de réaliser sur chaque objet, un marquage donnant au moins une information dépendante de la cavité d'origine de formage. Ainsi, il peut être prévu de marquer par exemple le numéro du moule ou de la cavité d'origine de formage.

Il est à noter que le poste de marquage **7** peut réaliser, sur chaque objet **2**, un marquage donnant une information, par exemple sur la machine de formage, la ligne de fabrication et/ou l'usine de fabrication.

Avantageusement, le poste de marquage **7** réalise sur chaque objet **2**, un marquage donnant au moins une information temporelle sur le moment de la formation des objets. Ainsi, le poste de marquage **7** peut assurer un horodatage à partir de l'une et/ou l'autre de ces informations telles que, la date de fabrication, l'heure, minutes et secondes de la fabrication.

Selon une autre caractéristique avantageuse de réalisation, le poste de marquage **7** réalise, sur chaque objet **2**, un marquage donnant une identification unique pour chacun des objets. En d'autres termes, chaque objet **2** porte un code ou un marquage différent des autres codes ou marquages portés par les autres objets. Ce code d'identification unique peut avantageusement être obtenu à partir de l'une et/ou de l'autre des informations suivantes : date, heure, minute, seconde de la fabrication, numéro de moule ou de cavité, référence de la machine de formage, de la ligne de fabrication, de l'usine de fabrication, etc.

Il est à noter que chaque marquage peut être réalisé en alphanumérique ou par un codage spécifique directement lisible ou crypté. Par exemple, le marquage peut être réalisé sous la forme d'un code data matrix facilitant les opérations de relecture en automatique.

## Revendications

1. Installation pour marquer des objets transparents ou translucides comportant :
- une machine de formage (**3**) comportant une série de cavités (**4**) équipées chacune d'un moule dans lequel l'objet prend sa forme finale à haute température,
- un convoyeur de sortie (**5**) pour les objets venant d'être formés par la machine de formage (**3**), amenés à défiler en file en translation successivement devant un poste de marquage (**7**) comportant un appareil (**9**) de production d'un faisceau laser (**11**) pour assurer un marquage des objets, le poste de marquage (**7**) étant relié à des moyens de synchronisation (**25**) avec la machine de formage (**3**) de manière que pour chaque objet passant devant le poste de marquage est connue la cavité d'où l'objet provient et le moment de la formation de l'objet, **caractérisée en ce que** le poste de marquage (**7**) est placé au plus près en sortie de la machine de formage (**3**), sur le trajet du convoyeur de sortie (**5**) et avec le faisceau laser qui présente une direction transversale par rapport à la direction de convoyage et **en ce que** le poste de marquage (**7**) réalise sur chaque objet, un marquage donnant une identification unique pour chacun des objets, obtenue à partir d'au moins une information sur le numéro du moule et/ou de la cavité d'origine de formage dudit objet, et de la date, l'heure, minute et seconde de fabrication dudit objet.

2. Installation selon la revendication 1, **caractérisée en ce qu'**elle comporte des moyens (**25**) de synchronisation avec la machine de formage (**3**), reliés au poste de marquage (**7**) de manière que le poste de marquage (**7**) réalise, sur chaque objet, un marquage donnant au moins une information sur la machine de formage, la ligne de fabrication et/ou l'usine de fabrication.

3. Procédé pour marquer à l'aide d'un faisceau laser (**11**), des objets (**2**) transparents ou translucides sortant d'un convoyeur de sortie (**5**) d'une machine de formage (**3**) comportant une série de cavités (**4**) équipées chacune d'un moule, les objets défilant en translation successivement devant un poste de marquage (**7**) synchronisé avec la machine de formage pour réaliser à l'aide d'un faisceau laser (**11**), un marquage sur chaque objet, **caractérisé en ce qu'**il consiste à placer au plus près en sortie de la machine de formage, le poste de formage (**7**) sur le trajet du convoyeur de sortie (**5**) assurant le déplacement des objets dans un plan (**x**, **y**) avec un sens de convoyage (**D**) de la direction (**x**), à placer le poste de formage (**7**) de sorte que le faisceau laser (**11**) présente une direction transversale (**z**) par rapport à la direction de convoyage (**D**) et à réaliser, sur chaque objet, un marquage donnant une identification unique pour chaque objet, obtenue à partir d'au moins une information sur le numéro du moule et/ou la cavité de formage dudit objet et de la date, l'heure, minutes et secondes de la fabrication de chacun desdits objets.

4. Procédé selon la revendication 3, **caractérisé en ce qu'**il consiste à synchroniser le poste de marquage (**7**) à la machine de formage (**3**) des objets de manière à réaliser, sur chaque objet, un marquage à partir d'au moins une des informations suivantes : machine de formage, ligne de fabrication, usine de fabrication, date de fabrication.

5. Procédé selon la revendication 3 ou 4, **caractérisé en ce qu'**il consiste à réaliser sur chaque objet un marquage codé.

## Patentansprüche

1. Anlage zur Markierung von durchsichtigen oder lichtdurchlässigen Gegenständen, umfassend:
- eine Formungsmaschine (3), umfassend eine Reihe von Hohlräumen (4), die jeweils mit einer Form ausgestattet sind, in der der Gegenstand seine endgültige Form bei hoher Temperatur annimmt,
- einen Ausgabeförderer (5) für die soeben von der Formungsmaschine (3) geformten Gegenständen, die dazu veranlasst werden, nacheinander in Translation vor einer Markierungsstation (7) abzulaufen, umfassend ein Gerät (9) zur Erzeugung eines Laserstrahls (11), um eine Markierung der Gegenstände zu gewährleisten, wobei die Markierungsstation (7) mit Synchronisierungsmittel (25) mit der Formungsmaschine (3) verbunden ist, so dass für jeden vor der Markierungsstation ablaufenden Gegenstand der Hohlraum, von dem der Gegenstand kommt, und der Zeitpunkt der Formung des Gegenstandes bekannt ist, **dadurch gekennzeichnet, dass** die Markierungsstation (7) möglichst nahe am Ausgang der Formungsmaschine (3) auf der Bahn des Ausgabeförderers (5) und mit dem Laserstrahl, der eine Querrichtung zur Förderrichtung aufweist, angeordnet ist, und dass die Markierungsstation (7) auf jedem Gegenstand eine Markierung durchführt, die eine einzigartige Identifizierung für jeden der Gegenstände ergibt, die aus mindestens einer Information über die Nummer der Form und/oder den Ausgangsformungshohlraum des Gegenstandes und das Datum, die Stunde, Minute und Sekunde der Herstellung des Gegenstandes erhalten wird.

2. Anlage nach Anspruch 1, **dadurch gekennzeichnet, dass** sie Synchronisierungsmittel (25) mit der Formungsmaschine (3) umfasst, die mit der Markierungsstation (7) verbunden sind, so dass die Markierungsstation (7) auf jedem Gegenstand eine Markierung durchführt, die mindestens eine Information über die Formungsmaschine, die Herstellungslinie und/oder das Herstellungswerk liefert.

3. Verfahren zur Markierung von durchsichtigen oder lichtdurchlässigen Gegenständen (2) mit Hilfe eines Laserstrahls (11), die von einem Ausgabeförderer (5) einer Formungsmaschine (3) kommen, umfassend eine Reihe von Hohlräumen (4), die jeweils mit einer Form ausgestattet sind, wobei die Gegenstände nacheinander in Translation vor einer mit der Formungsmaschine synchronisierten Markierungsstation (7) ablaufen, um mit Hilfe eines Laserstrahls (11) eine Kennzeichnung auf jedem Gegenstand durchzuführen, **dadurch gekennzeichnet, dass** es darin besteht, möglichst nahe am Ausgang der Formungsmaschine die Markierungsstation (7) auf der Bahn des Ausgabeförderers (5) anzuordnen, der die Verschiebung der Gegenstände in einer Ebene (x, y) mit einer Förderrichtung (D) der Richtung (x) gewährleistet, die Markierungsstation (7) derart anzuordnen, dass der Laserstrahl (11) eine Querrichtung (z) in Bezug zur Förderrichtung (D) aufweist, und auf jedem Gegenstand eine Markierung durchzuführen, die eine einzigartige Identifizierung für jeden Gegenstand ergibt, die aus mindestens einer Information über die Nummer der Form und/oder den Formungshohlraum des Gegenstandes und das Datum, die Stunde, Minute und Sekunde der Herstellung jedes der Gegenstände erhalten wird.

4. Verfahren nach Anspruch 3, **dadurch gekennzeichnet, dass** es darin besteht, die Markierungsstation (7) mit der Formungsmaschine (3) der Gegenstände zu synchronisieren, um auf jedem Gegenstand eine Markierung aus mindestens einer der folgenden Informationen durchzuführen: Formungsmaschine, Herstellungslinie, Herstellungswerk, Herstellungsdatum,

5. Verfahren nach Anspruch 3 oder 4, **dadurch gekennzeichnet, dass** es darin besteht, auf jedem Gegenstand eine codierte Markierung durchzuführen.

## Claims

1. An installation for marking transparent or translucent objects comprising:
- a forming machine (3) comprising a series of cavities (4) each equipped with a mould in which the object assumes its final shape at high temperature;
- an output conveyor (5) for the objects which have just been formed by the forming machine (3), which objects are caused to travel successively on a line in translation in front of a marking station (7) comprising apparatus (9) to produce a laser beam (11) to ensure marking of the objects, the marking station (7) being linked to means (25) to synchronize with the forming machine (3) so that for each object passing in front of the marking station, it is known from which cavity each object derives and the time of forming of the object,
the installation being **characterized in that** the marking station (7) is positioned as close as possible to the exit of the forming machine (3), on the pathway of the output conveyor (5) and with the laser beam that has a transverse direction relative to the conveying travel and **in that** the marking station (7) produces marking on each object which gives a unique identification for each of the objects, which identification is obtained from at least one item of information on the mould number and/or originating forming cavity of said object, and the date, time, minute and second of manufacture of said object.

2. An installation according to claim 1, **characterized in that** it comprises means (25) to synchronize with a forming machine (3), linked to the marking station (7), so that the marking station (7) produces a marking on each object giving at least one item of information on the forming machine, the production line and/or the production factory.

3. A marking method using a laser beam (11) to mark transparent or translucent objects (2) leaving an output conveyor (5) of a forming machine (3) comprising a series of cavities (4) each equipped with a mould, the objects successively travelling in translation in front of a marking station (7) that is synchronized with the forming machine to produce a marking on each object by means of a laser beam (11), the method being **characterized in that** it consists of positioning as close as possible to the exit of the forming machine, the forming station (7) on the pathway of the output conveyor (5) which ensures moving of the objects in a plane (x, y) with a conveying direction (D) of the direction (x), of positioning the forming station (7) such that the laser beam (11) has a transverse direction (z) relative to the conveying direction (D) and of producing, on each object, a marking giving a unique identification for each object, which identification is obtained from at least one item of information on the mould number and/or forming cavity of said object, and the date, time, minutes and seconds of manufacture of each one of said objects.

4. A method according to claim 3, **characterized in that** it consists of synchronizing the marking station (7) with the machine (3) forming the objects, so as to produce marking on each object based on at least one of the following data items: forming machine, production line, production factory, date of manufacture.

5. A method according to claim 3 or claim 4, **characterized in that** it consists of producing coded marking on each object.
